Europäisches Patentamt

European Patent Office

Office européen des brevets

(11) Publication number: **0 273 595**
**A1**

## (12) EUROPEAN PATENT APPLICATION

(21) Application number: **87310517.5**

(22) Date of filing: **27.11.87**

(51) Int. Cl.⁴: **B65G 19/20** , **F16G 13/12**

(30) Priority: **27.11.86 GB 8628369**

(43) Date of publication of application:
**06.07.88 Bulletin 88/27**

(84) Designated Contracting States:
**BE DE ES FR GB SE**

(71) Applicant: **WHEWAY BECKER LIMITED**
**Green Lane**
**Walsall West Midlands WS2 8HU(GB)**

(72) Inventor: **Bull, Michael John**
**25 Merridale Avenue**
**Wolverhampton West Midlands WV3**
**9RE(GB)**
Inventor: **Potts, Stephen Reginald**
**2 Cedar Close Parkside**
**Lichfield Staffs. WS14 9XD(GB)**

(74) Representative: **Leach, John Nigel et al**
**FORRESTER & BOEHMERT**
**Widenmayerstrasse 4/I**
**D-8000 München 22(DE)**

(54) **Chain.**

(57) A scraper chain conveyor comprising an apron (10) having at least one chain wheel (W) at each end therof, at least one endless drive chain (d) looped around said wheels (W) and apron (10) with an upper run and a lower run (20, 21) passing longitudinally above and below said apron (10) respectively, a series of scraper bars (22) secured at longitudinally spaced locations to said least one chain (d) and extending transversely relative thereto for scraping the upper surface (23) of the apron (10) and drive means for advancing said at least one chain (d) together with the scraper bars (22) longitudinally of the apron (10), wherein said at least one chain (d) comprises a plurality of interengaged links (30), each link comprising a closed loop made of material of non-circular cross-section, the cross-section having a maximum longitudinal dimension (L) which is greater than a maximum transverse dimension (T) and said transverse dimention (T) lying in, or parallel to, a central plane of the link.

## "Chain"

This invention relates to a chain and more particularly, but not exclusively, to a driving chain in or for a scraper chain conveyor, hereinafter referred to as the kind specified, comprising an apron having at least one chain wheel at each end thereof, at least one endless drive chain looped around said wheels and apron with an upper run and a lower run passing longitudinally above and below said apron respectively, a series of scraper bars secured at longitudinally spaced locations to said at least one chain and extending transversely relative thereto for scraping the upper surface of the apron and drive means for advancing said at least one chain together with the scraper bars longditudinally of the apron.

The conveyor may be a centre strand conveyor having at least one chain disposed in a middle region of the apron but the invention especially relates to a side strand conveyor having a pair of transversely spaced endless drive chains, the scraper bars extending between and being secured adjacent their ends to said chains and in which the apron is laterally bounded by upper and lower guide means for the drive chains and has a pair of chain wheels at each end thereof and the guide means include spaced upper and lower guide surfaces between which run the chains.

The capacity of a conveyor of the kind specified is limited by the strength of the drive chain and this is governed by the size of the chain as well as, of course, the material of which the chain is made. The maximum size of the chain is limited by the size of chain wheels in both a centre strand and a side strand conveyor and by the height of the space available for the chain on the apron, for example, in a side strand conveyor by the height available for the chain between the upper and lower guide surfaces and thus there is a limit to the extent to which the capacity of a conveyor with a particular size of chain and/or apron can be increased.

GB-A-2 127127 discloses a chain of a scraper chain conveyor in which horizontal links are of constant circular cross-section whilst alternate vertical links have arcuate end portions of the same circular cross-section as the horizontal links, interconnected by flattened longitudinally extending portions the maximum width of which is greater than the diameter of the circular cross-section end portions and the thickness of which is less than said diameter. The reduced thickness portions extend into the arcuate end portions and consequently constitue transition regions in which the cross-sectional area the link is reduced compared with the cross-sectional area of the other parts of the link thereby providing localised areas of weakness in a region where high stresses are imposed upon the link. In addition, the enlarged width of the longitudinally extending portions requires the chain wheels to be provided with grooves of greater than standard width which thus reduces the bearing surface available for engagement with the arcuate end portions of the horizontal links.

These short comings are identified in DE-A-3433715 which discloses a chain which seeks to overcome the above disadvantages by providing the flattened longitudinally extending regions of the vertical links with a width equal to the diameter of the arcuate end portions.

However, neither of these prior chains permit of the increase in the capacity of a given conveyor without changing the size of the chain wheel. In each of the prior references, the capacity of the chain is increased, within the spatial limitations afforded by the conveyor apron by virtue of the reduction in the overall height of the vertical link. However, the horizontal links, of constant circular cross-section, have to be made of correspondingly greater dimension than the chain which would be used with a given apron. Whilst the apron imposes no constraint upon such an increase in size of the horizontal links the chain wheels do and it is therefore necessry to increase the size of the chain wheels to accommodate the horizontal links. For example, if a given conveyor has an apron which conventionally accommodates chain made of 22mm diameter circular material then, whilst making the vertical links of one of the configurations described in the prior art references would enable the capacity of the vertical links to be increased, to for example, that of a 26mm diameter conventional chain, if the horizontal links are not increased in diameter to that of the conventional 26mm diameter chain then the horizontal links will be weaker than the vertical links.

An object of the present invention is to provide a scraper chain conveyor of the kind specified and chain for use therein which enables the capacity of the conveyor to be increased compared with the capacity available hitherto without change in apron size or chain wheel size.

According to one aspect of the invention we provide a scraper chain conveyor comprising an apron having at least one chain wheel at each end thereof, at least one endless drive chain looped around said wheels and apron with an upper run and a lower run passing longtudinally above and below said apron respectively, a series of scraper bars secured at longitudinally spaced locations to said least one chain and extending transversely relative thereto for scraping the upper surface of the apron and drive means for advancing said at least one chain together with the scraper bars longitudinally of the apron, wherein said at least one chain comprises a plurality of interengaged links, each link comprising a closed loop made of material of non-circular cross-section, the cross-section having a maximum longitudinal dimension which is greater than a maximum transverse direction and said transverse direction lying in, or parallel to, a central plane of the link.

The non-circular cross-section may comprise semi-circular end parts interconnected by spaced parallel rectilinear part.

The conveyor may be a centre strand conveyor having at least one chain disposed in a middle region of the apron.

Alternatively the conveyor may be a side strand conveyor having a pair of transversely spaced endless drive chains, the scraper bars extending between and being secured adjacent their ends to said chains and in which the apron is laterally bounded by upper and lower guide means for the drive chain and has a pair of chain wheels at each end thereof and the drive means include spaced upper and lower guide surfaces between which run the chains.

Where the conveyor is a centre strand conveyor or a side strand conveyor the maximum transverse dimension may be the same or substantially the same as the diameter of a chain of circular cross-section which would be conventionally used with said chain wheel.

The chain wheel may have the same pitch as a conventional chain wheel for use with a conventional chain of circular cross-section links having a diameter the same or substantially the same as said maximum transverse dimension.

The area of the cross-section be in a predetermined relationship to the cross-sectional area of a chain the links of which are comprised of material of circular cross-section and which is of a maxiumum dimension which would be conventionally used with said chain wheels in a centre or side strand conveyor or which would conventionally be used between said guide surfaces in the case of a side strand conveyor.

Said predetermined relationship may be such that the area of the cross-section of a chain according to the present invention is greater than the area of the cross-section of said maximum size of chain conventionally used.

The cross-sectional area of the chain may be greater than pi multiplied by the square of half said maximum transverse dimension.

The area may be not less than 30% greater, may be 30-50% greater and preferably is about 40% greater

Each link may have been made by bending the link to said closed loop shape from stock of said non-circular cross-section.

Preferably, the non-circular section is constant throughout each link.

According to another aspect of the invention we provide a method of making a chain comprising the steps of separating a plurality of blanks from stock of non-circular cross-section, forming said blanks into a plurality of inter-engaged closed loops in which adjacent ends of each blank are joined together, the blanks orientated so that each closed loop provides a link made of material of non-circular cross-section, the cross-section having a maximum longitudinal dimension which is greater than a maximum transverse dimension and said transverse direction lying in, or in parallel to, a central plane of the link and the area of said cross-section being greater than pi multiplied by the square of half said maximum transverse dimension.

The blanks may be formed by bending about a mandrel or the like.

The adjacent ends of each loop may be joined together by welding preferably by resistance butt welding.

The separating operation may comprise a cropping operation and the cropping operation may provide a pair of bevels on the cropped ends, the bevels being provided on at least the parts of the cross-section which have said maximum longitudinal dimension.

According to another aspect of the invention we provide a chain comprising a plurality of inter-engaged links, each link comprising a closed loop made of material of non-circular cross-section, the cross-section having a maximum longitudinal dimension which is greater than a maximum transverse direction and said transverse direction lying in, or parallel to, a central plane of the link and in which area of the cross-section is greater than pi multiplied by the square of half said maximum transverse dimension.

The area may be not less than 30% greater, may be 30 to 50% greater and preferably about 40% greater.

The non-circular cross-section may comprise semi-circular end parts interconnected by spaced parallel rectilinear parts.

Preferably, the non-circular cross-section is constant throughout each link.

An example of the invention will now be described with reference to the accompanying drawings wherein

FIGURE 1 is a fragmentary cross-sectional view through part of a scraper chain conveyor embodying the invention,

FIGURE 2 is a side elevation of part of the chain used in the conveyor of Figure 1 and

FIGURE 3 is a section on the line 3-3 of Figure 2.

FIGURES 4A-4C are diagramatic side elevations of chain wheels and

FIGURES 5A-5C are sections on the lines 5-5 of Figures 4A - 4C respectively, and

FIGURE 6 is a diagramatic cross-sectional view showing a further embodiment of the invention.

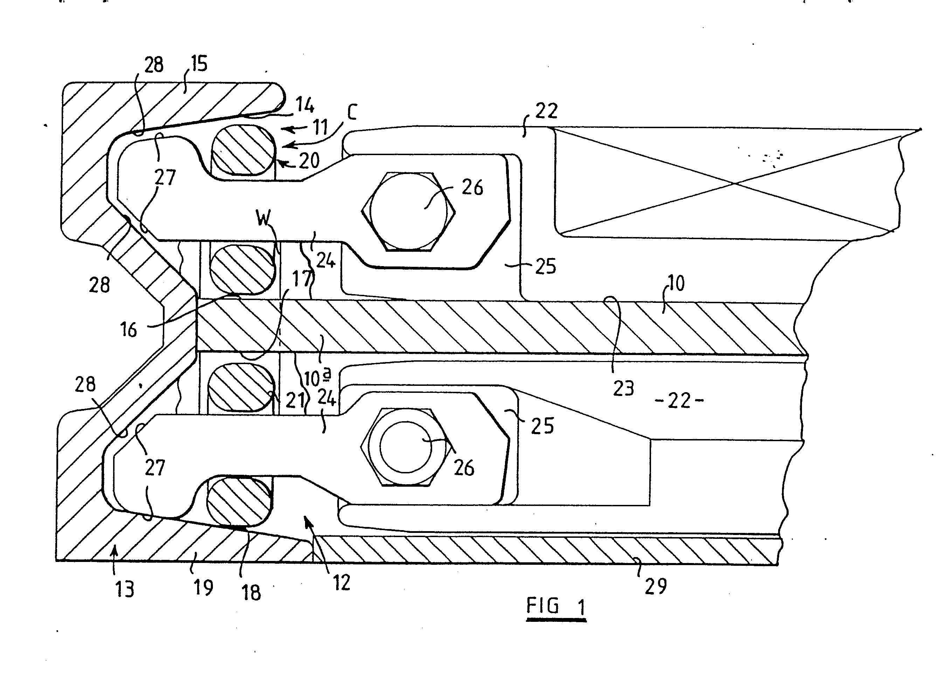

Referring to the drawings, there is shown in Figure 1 one side of a side strand scraper chain conveyor comprising an apron 10 bounded transversely on each side by upper and lower guide means, 11, 12 respectively provided by side portions 10a of the apron 10 and side wall members 13.

The upper guide means 11 comprises an upper guide surface 14 provided by a top limb 15 of the side wall member 13 and a lower guide surface 16 provided by the side part 10a of the spron 10.

The lower guide means 12 comprises an upper guide surface 17 provided by a side portion 10a of the apron 10 and a lower guide surface 18 provided by a bottom limb 19 of the side wall member 13. Between the respective upper and lower guide surfaces 14, 16 and 17, 18 there is circulated upper and lower runs 20, 21 of a continuous drive chain C which are looped around the apron 10 so that the upper and lower runs pass longitudinally above and below the apron respectively.

A series of scraper bars 22 extend between and are secured at longitudinally spaced locations to the chains C for scraping the upper surface 23 of the apron 10. The scraper bars 22 are secured to the chains in conventional manner by connecting links 24 which are bolted to end portions 25 of their associated scraper bar by means of a nut and bolt connection 26. The connectors 24 have abutment surfaces 27 for engagement with further guide surfaces 28 provided on the side wall members 13.

A drive means comprising a pair of driven sprocket or chain wheels W and a pair of idler sprocket or chain wheels W around which the chains C are entrained are provided at opposite ends of the apron to advance the chains C together with the scraper bars 22 longitudinally of the arpon. The bottom of the conveyor assembly is closed by a bottom closure member 29.

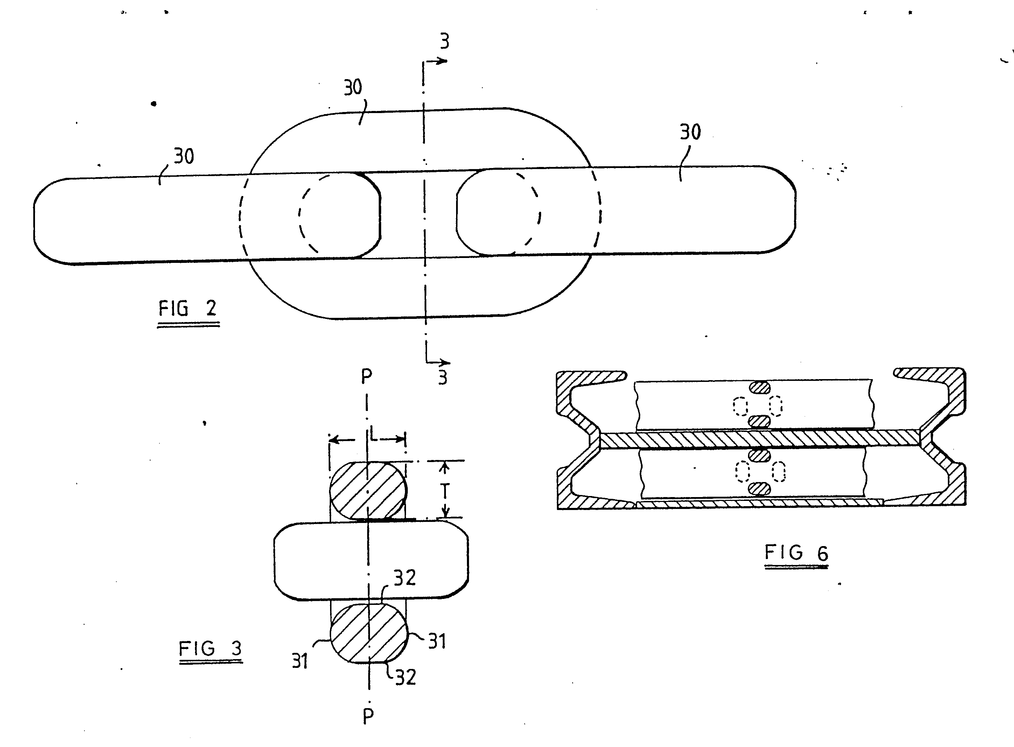

As best shown in Figures 2 to 3 each chain C comprises a plurality of inter-engaged links 30 each link comprising a closed loop made of material of non-circular cross-section.

As best shown in Figure 3 the non-circular cross-section has a maximum longitudinal dimension L which is greater than the maximum transverse dimension T. The maximum transverse dimension T lies in the central plane P-P of the link. By central plane of the link is meant the plane which contains the centre of the cross-sectional area at any position around the closed loop of the link.

In the present example the cross-sectional area comprises two spaced semi-circular parts 31 interconnected by spaced parallel rectilinear parts 32 so that the cross-section is of generally oval shape.

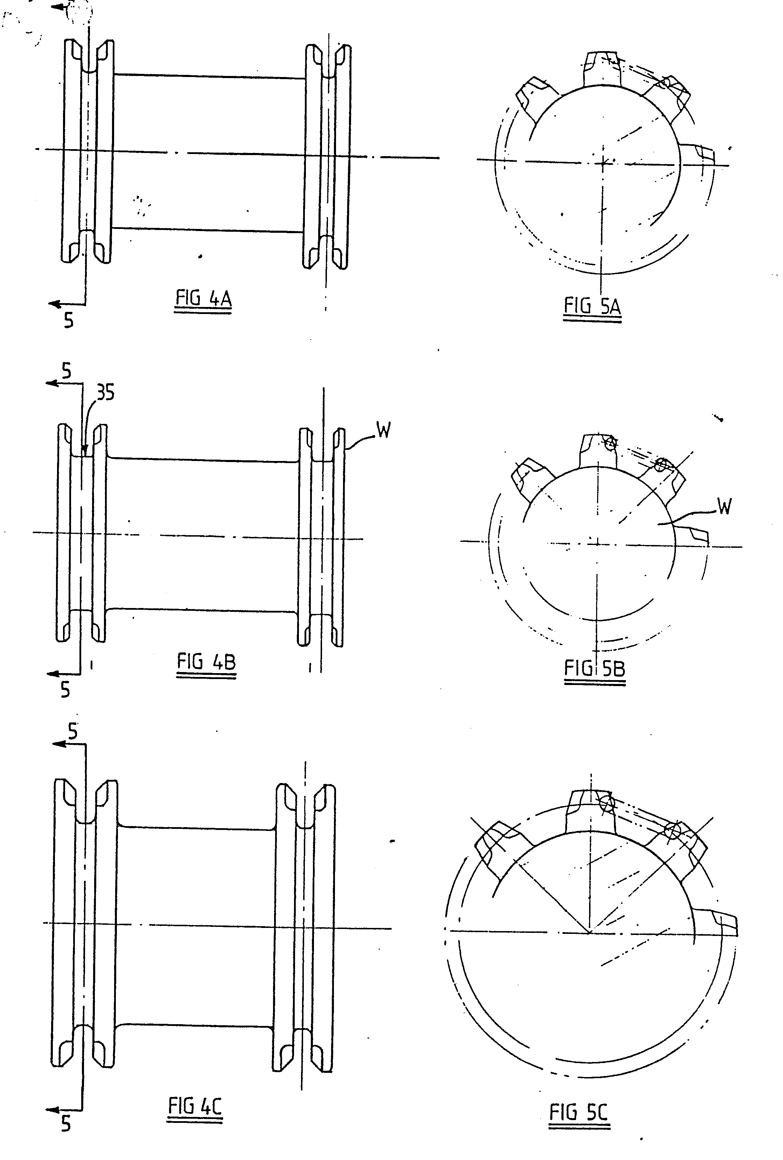

In the present example the dimension L is 28mm and dimension T 22mm. This provides a cross-sectional area which is substantially the same as that of a conventional chain made of material of circular cross-section and having a diameter of 26mm. Thus, in the present example the chain has a breaking strength approximately equal to that of a chain of material 26mm diameter but since the dimension T is 22mm the chain can be accomodated between guide surfaces and chain wheels which are not capable of receiving a 26mm diameter chain. Therefore, the present invention permits the maximum capacity of the apron guide means, and the chain wheels W illustrated in Figures 1, 4A and 4B which are designed for use with conventional chain made of 22mm diameter material to be increased above that which would be possible if the chain were made of material of circular cross-section and of the maximum size receivable between the guide surfaces 14, 16 and 17, 18 and by the chain wheels W that is, a chain of 22mm diameter.

The distance between the upper and lower guide surfaces 14, 16 and 17, 18 in the present example is approximately 84mm. The overal width of each link is approximately 76mm hence the maximum transverse dimension of the cross section i.e. 22mm is approximately 26% of the distance between the upper and lower guide surfaces and the overal width of each link is approximately 345% of the maximum transverse dimension.

It will be appreciated that the distance between the upper and lower guide surfaces may be somewhat greater or somewhat smaller than that described above; obviously the distance cannot be too small otherwise the chain would bind and conversely the distance should not be too great otherwise the apron would be of unnecessarily greater height. It is envisaged that the percentages described above may be varied by for example, upto approximately plus or minus 3% and reference herein to "about" should be understood to indicate such variation.

Of course, the above mentioned dimensions are given only by way of example and the invention may be applied to chains of other dimensions and also chains where the ratio of the transverse dimension to the longtudinal dimension differs from that described hereinbefore. For example, the dimension L may be 26mm and the dimension 19mm. This provides a cross-section area which is substantally the same as that of a conventional chain made of material of circular cross-section and having a diameter of 24mm.

Figure 4A and Figure 5A show, in side elevation and cross-section respectively, a conventional pair of chain wheels which would be provided in the conveyor hereinbefore described for use with conventional chain having links of circular cross-section of 22mm diameter.

Figures 4B and 5B are similar views to Figures 4A and 5A but showing a modified version of the chain wheels shown in Figures 4A and 5A in which the central groove 35 is widened compared to the width of the groove shown in Figures 4A and 5A in order to accept a chain with links of non-circular cross-section according to the present invention. In other respects, such as the pitch of the 'teeth', the chain wheels of Figures 4B and 5B are the same as the chain wheels shown in Figures 4A and 5A.

Figures 4C and 5C are similar figures to Figures 4A and 5A but shown chain wheels which would be required for use with a chain made according to the teaching of the prior specifications Nos. GB-A-2127127 and DE-A-3433715. It will be seen that a pair of chain wheels similar to conventional chain wheels for conventional chains of circular cross-section and of 26mm diameter are required but with the chain centres made of a non-standard separation so that the pair of chain wheels can accept the "larger" conventional horizontal links provided in such chains. The chain wheels of Figures 4C and 5C are of course of substantially larger diameter and have 'teeth' of substantially greater pitch than the chain wheels of Figures 4A, 5A and 4B, 5B.

It will be noted that the chain wheels shown in Figures 4B, 5B have a pitch which is the same as the pitch of the conventional chain wheel, shown in Figures 4A and 5A, for use with a conventional chain of circular cross-section links having a diameter which is about the same as the maximum transverse dimension of a chain according to the invention i.e. in the present example chain of 22mm diameter.

The chain is manufactured in conventional manner but using the above described non-circular stock instead of circular stock. That is, blanks are separated from a length of the non-circular stock, bent around a mandrel to provide a plurality of inter-linked closed loops and the adjacent ends of each blank of a loop are joined together, for example, by resistance butt welding.

Using non-circular stock particularly facilitates the chain making operation since it permits of the apparatus being provided with means to orientate the chain in a desired orientation so that the conventional weld preparation i.e. opposed bevels formed during cropping is correctly aligned in the apparatus.

If desired the links may be manufactured in any other desired way. For example, the links may be manufactured from initially circular cross-section stock which is formed to provide said links made of non-circular material.

Although in the above example the case of a cross-section as illustrated in Figure 3 is described if desired the cross-section may be of other non-circular shape. For example, of elliptical shape or of other non-circular shape where the maximum longitudinal and transverse dimensions are as described above. For example, the chain cross-section may include two portions of equal longitudinal and/or transverse cross-section separated by portions of shorter length. In such a case whilst the two portions of maximum transverse, and/or longitudinal, dimension would not be coincident with, or perpendicular to, said central plane they would be parallel, to or parallel to a perpendicular to, said plane and as a result when the chain is between the guide surfaces of the guide means then the maximum transverse dimension would be diposed so as to extend between the associated guide surfaces.

If desired the invention may be embodied in a scraper chain conveyor of centre strand type in which one or more chains are disposed in a middle region of the apron and the scraper bars are attached to the or each chain so as to extend transversely relative thereto. An example of such a conveyor is illustrated in Figure 6 utilising a single chain. In the conveyor shown in Figure 6 the single chain illustrated is identical to each of the chains of the conveyor described with reference to Figures 1 to 5.

## Claims

1. A scraper chain conveyor comprising an apron having at least one chain wheel at each end thereof, at least one endless drive chain looped around said wheels and apron with an upper run and a lower run passing longitudinally above and below said apron respectively, a series of scraper bars secured at longitudinally spaced locations to said least one chain and extending transversely relative thereto for scraping the upper surface of the apron and drive means for advancing said at least one chain together with the scraper bars longitudinally of the apron, wherein said at least one chain comprises a plurality of interengaged links, each link comprising a closed loop made of material of non-circular cross-section, the cross-section having a maximum longitudinal dimension which is greater than a maximum transverse direction and said transverse direction lying in, or parallel to, a central plane of the link.

2. A conveyor according to claim 1 the non-circular cross-section comprises semi-circular end parts interconnected by spaced parallel rectilinear parts.

3. A conveyor according to any one of the preceding claims wherein the cross-sectional area of the chain is greater than pi multiplied by the square of half said maximum transverse dimension.

4. A conveyor according to claim 3 wherein the area is not less than 30% greater.

5. A coinveyor according to any one of the preceding claims wherein each link has been made by bending the link to said closed loop shape from stock of said non-circular cross-section.

6. A conveyor according to any one of the preceding claims wherein the non-circular section is constant throughout each link.

7. A method of making a chain comprising the steps of separating a plurality of blanks from stock of non-circular cross-section, forming said blanks into a plurality of inter-engaged closed loops in which adjacent ends of each blank are joined together, the blanks being orientated so that each closed loop provides a link made of material of non-circular cross-section, the cross-section having a maximum longitudinal dimension which is greater than a maximum transverse dimension and said transverse direction lying in, or parallel to, a central plane of the link and the area of said cross-section being greater than pi multiplied by the square of half said maximum transverse dimension.

8. A chain comprising a plurality of inter-engaged links, each link comprising a closed loop made of material of non-circular cross-section, the cross-section having a maximum longitudinal dimension which is greater than a maximum transverse direction and said transverse direction lying in, or parallel to, a central plane of the link and in which area of the cross-section is greater than pi multiplied by the square of half said maximum transverse dimension.

9. A chain according to claim 3 wherein the area is not less than 30% greater.

10. A chain according to claim 8 or claim 9 wherein the non-circular cross-section comprises semi-circular end parts interconnected by spaced parallel rectilinear parts.

11. A chain according to any one of claims 8 to 10 wherein the non-circular cross-section is constant throughout each link.

FIG 1

FIG 2

FIG 3

FIG 6

0 273 595

FIG 4A

FIG 5A

FIG 4B

FIG 5B

FIG 4C

FIG 5C

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,Y | GB-A-2 127 127 (GEWERKSCHAFT EISENHÜTTE WESTFALIA) * Abstract; figures * | 1 | B 65 G 19/20 F 16 G 13/12 |
| A | | 2,6,7 | |
| Y | DE-C- 939 545 (GEWERKSCHAFT EISENHÜTTE WESTFALIA) * Page 2, lines 56-79; figures * | 1 | |
| D,Y | DE-A-3 433 715 (Fa. AUGUST THIELE) * Abstract; figures * | 1 | |
| A | | 3,4,6-9 | |
| Y | US-A-4 498 284 (G.E. GEARHART) * Abstract; figures * | 1 | |
| A | | 2,7 | |
| A | DE-C- 200 383 (E. HECKEL) * Whole document * | 1,3,4,6 ,7 | |
| P,X | DE-A-3 520 363 (Fa. AUGUST THIELE) * Whole document * | 1-11 | TECHNICAL FIELDS SEARCHED (Int. Cl.4) B 65 G F 16 G |

The present search report has been drawn up for all claims

| Place of search | Date of completion of the search | Examiner |
|---|---|---|
| THE HAGUE | 25-02-1988 | VAN ROLLEGHEM F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)